(19) Europäisches Patentamt

European Patent Office

Office européen des brevets

(11) **EP 1 036 624 A2**

(12) **EUROPÄISCHE PATENTANMELDUNG**

(43) Veröffentlichungstag:
20.09.2000 Patentblatt 2000/38

(51) Int. Cl.⁷: **B23F 5/04**, B23F 19/00

(21) Anmeldenummer: **00105164.8**

(22) Anmeldetag: **11.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.03.1999 DE 19911235**

(71) Anmelder:
**GLEASON-PFAUTER,
Maschinenfabrik GmbH
71636 Ludwigsburg (DE)**

(72) Erfinder:
• **Faulstich, Ingo Dr.-Ing.
71634 Ludwigsburg (DE)**
• **Heidelmann, Wilfried, Dipl-Ing.
71634 Ludwigsburg (DE)**

(74) Vertreter: **Kohl, Karl-Heinz
Patentanwälte
Dipl.-Ing. A.K. Jackisch-Kohl
Dipl.-Ing. K.H. Kohl
Stuttgarter Strasse 115
70469 Stuttgart (DE)**

(54) **Verfahren zur Bearbeitung der Flanken im wesentlichen zylindrischer, aber breitenballig modifizierter Verzahnungen im kontinuierlichen Diagonal-Wälzverfahren**

(57)    Zur Bearbeitung der Flanken im wesentlichen zylindrischer, aber breitenballig modifizierter Verzahnungen im kontinuierlichen Diagonal-Wälzverfahren wird ein schneckenförmiges Werkzeug verwendet, dessen Steigungshöhe über der Schneckenlänge nicht konstant ist. Bei der Bearbeitung werden die Steigungshöhenmodifikation (MHO) des Werkzeuges (0), das Diagonalverhältnis (D) und der Abstand (X) der Achsen von Werkzeug (0) und Werkstück (2), abhängig von der momentan wirksamen werkstückaxialen Arbeitsposition (Z), also (X(Z)), sowie der Drehanteil (ΔC) der Schraubbewegung des Werkzeuges (0) relativ zum Werkstück (2) abhängig von der momentan wirksamen werkstückaxialen Arbeitsposition, also (ΔC(Z)), so aufeinander abgestimmt, daß der aus dem werkstückaxialen Versatz der Erzeugungsberührspuren auf beiden Flanken resultierende Einfluß auf den erzeugten Schrägungswinkel über eine Anpassung des Drehanteils der Schraubbewegung (ΔC) des Werkzeuges (0), abhängig von der werkstückaxialen Arbeitsposition (Z), also (ΔC(Z)), ausgeglichen wird, und die aus der Änderung des Achsabstandes bzw. aus der Änderung des Drehanteils der Schraubbewegung entstehenden Anteile von Breitenballigkeit und Schränkung und die aus der Diagonalbewegung des steigungshöhenmodifizierten des Werkzeuges (0) entstehenden Anteile von Breitenballigkeit und Schränkung resultierend die gewünschten Werte für Breitenballigkeit und Schränkung ergeben.

Fig.1

**Beschreibung**

Die Erfindung betrifft ein Verfahren zur Bearbeitung der Flanken im wesentlichen zylindrischer, aber breitenballig modifizierter Verzahnungen im kontinuierlichen Diagonal-Wälzverfahren nach dem Oberbegriff des Anspruches 1.

Bei der Erzeugung schrägverzahnter breitenballiger Zylinderräder im kontinuierlichen Wälzverfahren entstehen verwundene Flanken. Ein Maß für die Verwindung ist die Schränkung.

Es besteht die Forderung, die Schränkung zu vermeiden oder eine von der "natürlichen Schränkung" abweichende Schränkung der Flanken zu erzeugen.

Zur Lösung dieser Aufgabe ist bekannt (DE 37 04 607), die Verzahnung im kontinuierlichen Diagonalwälzverfahren zu bearbeiten und dabei ein schneckenförmiges Werkzeug einzusetzen, dessen Eingriffswinkel der Rechts- bzw. Linksflanken von einem Maximalwert an einem Ende der Schnecke ausgehend zum anderen Ende hin kontinuierlich abnimmt, wobei der maximale Eingriffswinkel der Rechtsflanken an einem Ende der Schnecke mit dem minimalen Eingriffswinkel der Linksflanken zusammenfällt und umgekehrt. Dieses Werkzeug ist außerordentlich aufwendig in der Herstellung.

Es ist ferner bekannt (Seminar "Praxis der Zahnradfertigung", Technische Akademie Esslingen, 25. bis 27.03.1996), die Schleifschnecke breitenhohl zu gestalten, im Diagonalverfahren einzusetzen und die notwendigen Informationen zur Auslegung aus einer speziellen "Balligkeits-Hüllfläche" abzuleiten. Diese Balligkeits-Hüllfläche ist über einer Bezugsebene dargestellt, die tangential zu einem Zylinder konzentrisch zur Radachse liegt; vermutlich ist dies der Teilzylinder. Eine derartige Balligkeits-Hüllfläche ist unbekannt. Es erscheint im übrigen auch nicht möglich, die unterschiedlich verwundenen Balligkeits-Hüllflächen der beiden Flanken zu einer gemeinsamen Hüllfläche zusammenzufassen.

Die folgenden Ausführungen werden darüber hinaus zeigen, daß mit einer hohlballigen Schnecke im Diagonalverfahren selbst wieder eine Breitenballigkeit entsteht. Eine korrekte Entzerrung der Flächen bzw. die gezielte Erzeugung einer gewünschten Schränkung ist deshalb über die Gestaltung des Werkzeuges und seine Diagonalverschiebung (simultane Verschiebung in Richtung der Achsen von Werkzeug und Werkstück) allein nicht möglich.

Der Erfindung liegt die Aufgabe zugrunde, das gattungsgemäße Verfahren so auszubilden, daß breitenballig modifizierte Flanken im Ein- bzw. Zweiflankenprozeß mit praktisch beliebigen Schränkungen erzeugbar sind, daß geometrisch einfache Werkzeuge eingesetzt werden können, daß auch nach Shiften des Werkzeuges noch theoretisch exakte Ergebnisse erreicht werden, und daß die für das Bearbeiten eines Werkstückes benötigte aktive Werkzeuglänge in weiten Grenzen frei wählbar ist.

Diese Aufgabe wird beim gattungsgemäßen Verfahren erfindungsgemäß mit den kennzeichnenden Merkmalen des Anspruches 1 gelöst.

Durch die Abstimmung der Steigungshöhenmodifikation des Werkzeuges, des Diagonalverhältnisses und des Achsabstandes zwischen Werkzeug und Werkstück bzw. des Drehwinkels des Werkstückes kann am Werkstück in einfacher Weise und mit geometrisch einfachen Werkzeugen die gewünschte Breitenballigkeit und die gewünschte Schränkung hergestellt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

Fig. 1           ein Werkzeug 0, ein Werkstück 2 sowie Achsen zur Beschreibung von Positionen, Strecken und Bewegungen,

Fig. 2           einen Blick in eine Zahnlücke eines schrägverzahnten Zylinderrades (oberer Teil) und einen Stirnschnitt in Eingriff mit einer Zahnstange (unterer Teil),

Fig. 3           eine Darstellung zur Bestimmung der Flankentopographie in einer Tangentialebene an den Grundzylinder der Werkstückverzahnung sowie den Verlauf der Flanken-Linienmodifikation in Form einer Breitenballigkeit,

Fig. 4a und Fig. 4b      den Eingriff eines Zahnrades mit steigungshöhenmodifizierten schneckenförmigen Werkzeugen,

Fig. 5           eine Skizze zur Ermittlung der notwendigen Schneckenlänge, um im Stirnschnitt einer Flanke das Profil voll auszubilden,

Fig. 6           in einem Diagramm die Änderung der Steigungshöhe $\delta H_y$ in Abhängigkeit von der Koordinate y der Schneckenachse,

Fig. 7           Achsen B, C, Y und A aus Fig. 1 zur Bestimmung der Art der notwendigen Steigungshöhenmodifikation (B breitenballig, H breitenhohl).

Anhand der folgenden Betrachtungen wird erläutert, wie beim Bearbeiten schrägverzahnter, breitenballiger Zylinderräder im kontinuierlichen Wälzverfahren die Schränkung der Flanken entsteht, wie man sie vermeiden oder auf ein gewünschtes Maß bringen kann, und wie die dazu erforderlichen Werkzeuge ausgelegt werden.

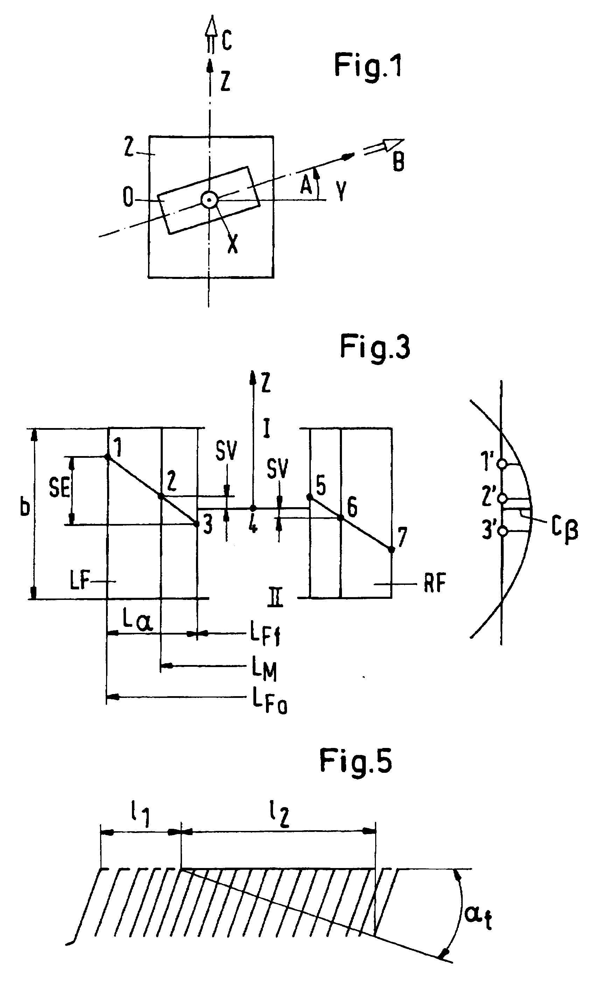

Die Betrachtungen gehen aus von einer Maschine mit vertikaler Werkstückdrehachse, wie sie vom Wälzfräsen her bekannt ist. Die Achsen zur Beschreibung von Positionen, Wegen und Bewegungen (Fig. 1) sind:

X    Achsabstand (radial)
Y    Werkzeugachsrichtung (tangential)
Z    Werkstückachsrichtung (werkstück-axial)
A    Schwenkung Werkzeugachse
B    Drehung Werkzeug
C    Drehung Werkstück

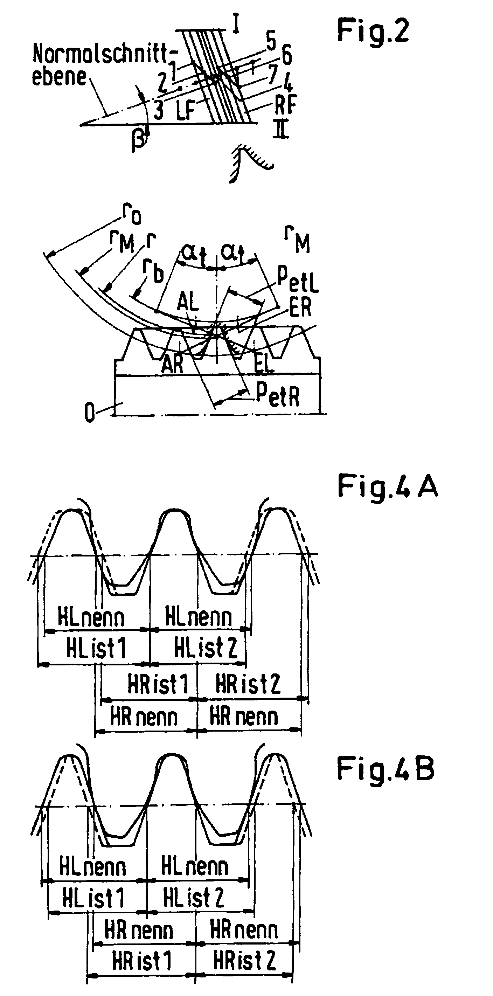

Fig. 2 zeigt im oberen Teil den Blick radial in die Zahnlücke eines schrägverzahnten Zylinderrades, im unteren Teil den Stirnschnitt dieses Rades in Eingriff mit einer Zahnstange. Die Flanken dieses Rades seien im wesentlichen von Evolventen-Schraubenflächen gebildet; es seien jedoch Breitenballigkeiten vorhanden. Die in Fig. 2 verwendeten Zeichen haben folgende Bedeutung:

I       Bezugsstirnfläche
II      Nicht-Bezugsstirnfläche
$r_a$     Radius am Kopfzylinder
$r_M$     Radius am Meßzylinder
r       Radius am Teilzylinder
$r_b$     Radius am Grundzylinder
$\alpha_t$     Stirneingriffswinkel
$p_{etL}$    Stirneingriffsteilung der Linksflanken
$p_{etR}$    Stirneingriffsteilung der Rechtsflanken
$\overline{AL\ EL}$    Eingriffsstrecke der Linksflanken
$\overline{AR\ ER}$    Eingriffsstrecke der Rechtsflanken

Der Linienzug 1 ... 7 verbindet alle während einer Werkstückumdrehung in einer Zahnlücke bei einem gegen Null gehenden Axialvorschub ausgebildeten Punkte. Die besonders gekennzeichneten Punkte liegen auf folgenden Schraubenlinien:

1    Kopfformzylinder der Linksflanke
2    Meßzylinder der Linksflanke
3    Fußformzylinder der Linksflanke
4    Lückenmitte (die Position des Punktes 4 ist gleichzeitig die zum Linienzug 1 ... 7 gehörende Axialschlittenposition)
5    Fußformzylinder der Rechtsflanke
6    Meßzylinder der Rechtsflanke
7    Kopfformzylinder der Rechtsflanke

Sofern Werkzeug 0 und Werkstück 2 im geforderten Übersetzungsverhältnis drehen, der Axialvorschub noch nicht eingeschaltet ist und der Fuß des Werkstückes 2 mit überarbeitet wird, erfolgt eine Berührung zwischen Werkzeug 0 und Werkstück 2 auf dem Linienzug 1, 2, 3, 4, 5, 6, 7. Für die Ausbildung der Linksflanke LF wird der Linienzug 1, 3 und für die Ausbildung der Rechtsflanke RF der Linienzug 5, 7 benötigt. Es besteht "Punktkontakt" zwischen Werkzeug 0 und Werkstück 2. "Punktkontakt" bedeutet, daß unter idealen Bedingungen in jeder aktiven Wälzstellung nur jeweils ein Punkt der "Erzeugungs-Berührspuren" 1, 3 bzw. 5, 7 Berührung zwischen Werkzeug und der idealen Werkstückendkontur aufweist.

Es sei angenommen, daß die Punkte 1 .... 7 starr miteinander verbunden sind. Während der Bearbeitung führen Werkzeug 0 und Werkstück 2 der Grunddrehung überlagert eine Schraubbewegung aus. Dabei bewegt sich der Linienzug 1 ..... 7 in Richtung Z, das Werkstück 2 führt eine entsprechende Zusatzdrehung C aus. Dabei beschreiben die Kurvenzüge 1, 2, 3 und 5, 6, 7 in einem Werkstück-Koordinatensystem Teile von Evolventenschraubenflächen.

Erfolgt während der Bewegung eine Änderung des Achsabstandes $\Delta X$ zwischen Werkzeug 0 und Werkstück 2, so entstehen Flanken, die von den Nenn-Evolventenschraubenflächen abweichen.

Jede Änderung des Achsabstandes $\Delta X$ führt, wie z.B. vom Wälzfräsen zylindrischer Evolventenverzahnungen bekannt, zu einer Änderung des Aufmaßes (bzw. des Abtrages) q um

$$q = \Delta X * \sin \alpha$$

bzw. zu einer Änderung des Aufmaßes $q_t$ im Stirnschnitt des Werkstückes 2 um

$$q_t = \Delta X * \sin \alpha_t.$$

In diesen Gleichungen ist $\alpha$ der Eingriffswinkel und $\alpha_t$ der Stirn-Eingriffswinkel der Werkstückverzahnung.

Die Punkte der Spuren 1, 3 und 5, 7 besitzen dasselbe Niveau bezüglich der Nenn-Evolventenschraubenfläche, d.h. jeder dieser Punkte ist gleich weit vom zugehörigen Punkt der Nenn-Evolventenschraubenfläche entfernt.

Stellt man sich vor, daß das Zahnrad 2 in Fig. 2 eine übliche Breitenballigkeit erhalten soll, so entstehen beim Arbeiten mit zylindrischem schneckenförmigem Werkzeug Flanken, bei denen Linien gleichen Niveaus schräg über der Flanke verlaufen. Beim Bearbeiten in Richtung +Z erreicht als erstes Punkt 1 am Kopf der Linksflanke LF die Ebene I. Die Punkte 2 und 3 erreichen die Ebene I aufgrund der Breitenballigkeit bei niedrigerem Niveau. Es entsteht also eine Profilabweichung mit vorstehendem Werkstück-Kopf. Damit liegt eine Eingriffswinkelabweichung $f_{H\alpha} > 0$ vor. Wendet

man die gleichen Überlegungen auf die Rechtsflanke RF und auf beide Flanken in der Ebene II an, so erkennt man: Im vorliegenden Fall (Werkstück linksschräg) steht in der Ebene I der Kopf der Linksflanke LF (Fuß der Rechtsflanke) gegenüber dem Fuß (Kopf) vor, in der Ebene II sind die Verhältnisse umgekehrt.

Das hier erläuterte Prinzip ist zwar anschaulich; es ist aber aus mehreren Gründen für quantitative Betrachtungen schlecht geeignet. Deshalb werden im folgenden die Flanken jeweils in einer Tangentialebene an den Grundzylinder (Figur 3) dargestellt. Die geometrisch komplizierten Evolventen-Schraubenflächen gehen dabei über in Rechtecke mit den Kantenlängen $L_\alpha$ und b. Der Abstand der Flanken kann beliebig gewählt werden. Man kann nun den Punkt 4 entsprechend dem geforderten Verlauf der Flankenballigkeit im rechten Teil des Bildes bei Bewegung in Richtung Z von der Zeichenebene abheben bzw. auch unter die Zeichenebene senken. Hält man die Punkte 1 ..... 7 dabei mit dem Punkt 4 starr verbunden, so beschreiben die Spuren 1, 2, 3 bzw. 5, 6, 7 die Topografie der Links- bzw. Rechtsflanken. Ein Schnitt durch die "Balligkeits-Hüllflächen" mit den Ebenen I bzw. II liefert vier Profile; sie lassen sich als Profil-Diagramme darstellen und jeweils in ihre Anteile zerlegen. Die Gesamtabweichung enthält als Komponenten jeweils eine Profil-Winkelabweichung und eine in allen Stirnschnitten und auf beiden Flanken gleiche Höhenballigkeit. Man kann ebenfalls die Flanken-Liniendiagramme auf dem jeweiligen Meßzylinder bestimmen. Dazu sind Schnitte senkrecht zur Zeichenebene durch die durch 2 bzw. 6 verlaufenden Geraden in Richtung Z zu bestimmen.

Aufgrund des Spurversatzes SV sind die Hochpunkte der Balligkeiten auf Links- bzw. Rechtsflanke um 2 * SV in Achsrichtung des Werkstückes 2 versetzt. Dies führt zu einer Flankenlinien-Winkelabweichung auf beiden Flanken. Sie läßt sich berechnen und im vorliegenden Fall über eine entsprechende Vergrößerung des programmierten Schrägungswinkels beseitigen.

Aus den Profilwinkelabweichungen einer Flanke in den Ebenen I und II läßt sich die Schränkung des Profils dieser Flanke berechnen. Es gilt

$$S\alpha = f_{H\alpha I} - f_{H\alpha II}.$$

Möchte man die Schränkung z.B. der Linksflanken LF des Rades 2 in Fig. 2 beseitigen, so benötigt man ein Werkzeug 0, das in der Ebene I ein $f_{H\alpha} = -f_{H\alpha I}$, in Zahnbreitenmitte ein $f_{H\alpha} = 0$ und in der Ebene II ein $f_{H\alpha} = + f_{H\alpha I}$ erzeugt.

Eine Profil-Winkelabweichung läßt sich im kontinuierlichen Wälzverfahren mit schneckenförmigem Werkzeug 0 über den Eingriffswinkel und/oder über die Steigungshöhe verwirklichen.

Betrachtet man nun drei Werkzeuge, von denen das erste die Profil-Winkelabweichungen in der Ebene I, das zweite keine und das dritte die in der Ebene II vorliegenden Profilwinkelabweichungen über angepaßte Steigungshöhen im Axialverfahren beseitigt, so erkennt man:

Am ersten Werkzeug müßte die Steigungshöhe der Schneckenflanke, die die Linksflanken (Rechtsflanken) am Werkstück bearbeitet, kleiner (größer) als die Nennsteigungshöhe der Schnecke ausgebildet werden. Das zweite Werkzeug wäre unmodifiziert, das dritte entgegengesetzt zum ersten zu modifizieren, d.h. zur Bearbeitung der Linksflanken (Rechtsflanken) wäre eine Steigungshöhe größer (kleiner) als die Nenn-Steigungshöhe erforderlich.

Ersetzt man nun die drei (kurzen) Schnecken durch eine lange, deren Steigungshöhe am linken (rechten) Ende des profilierten Bereiches gleich der des ersten (dritten) Werkzeuges ist und verbindet man die Abweichung von der Nenn-Steigungshöhe über eine quadratische Parabel, so nimmt vom linken zum rechten Schneckenende die Steigungshöhe zur Bearbeitung der Linksflanken (Rechtsflanken) linear zu (ab) bis auf die am anderen Ende der Schnecke jeweils benötigten Werte. Ein derartiges Werkzeug ist, wie aus Figur 4a hervorgeht, breitenballig. Die vollen Linien kennzeichnen in dieser Darstellung das unmodifizierte, die gestrichelten Linien das modifizierte Werkzeug 0.

Fig. 4b zeigt den Fall, daß die Zähne links bzw. rechts vom mittleren Schneckenzahn dünner sind, so daß die Schnecke 0 demnach breitenhohl ausgebildet ist.

Sollte die Breitenballigkeit des Werkstückes 2 nicht über eine quadratische Parabel beschreibbar sein, müßten die Form der Balligkeit des Werkzeuges und die Bewegungen während der Bearbeitung angepaßt werden.

Das modifizierte Werkzeug kann natürlich nur im Diagonalverfahren wirken. Dazu muß gleichzeitig mit der Axialschlittenverschiebung $\Delta Z$ eine Tangentialschlittenverschiebung $\Delta Y$ ausgeführt werden. Man bezeichnet

$$D = \Delta Y / \Delta Z$$

als Diagonalverhältnis.

Würde man das im Axialverfahren üblicherweise eingesetzte Werkzeug, das in der Steigungshöhe H nicht modifiziert ist, durch das breitenballige Werkzeug ersetzen, im Diagonalverfahren arbeiten und den Achsabstand zur Erzeugung der Breitenballigkeit so beibehalten, wie im Axialverfahren üblich, so könnte man u.a. feststellen: Es entsteht weder die gewünschte Breitenballigkeit noch die gewünschte Schränkung der Flanken. Die Ursache für diese Situation ist darin begründet, daß das modifizierte Werkzeug 0 selbst im Diagonalverfahren eine Breitenballigkeit und eine Schränkung erzeugt. Im hier diskutierten Beispiel ist diese Breitenballigkeit sogar negativ. Die Schränkung $S_\alpha$, die das modifizierte Werkzeug 0 erzeugt, ist darüberhinaus nicht, wie möglicherweise erwartet, gleich

$f_{H\alpha I}$ - $f_{H\alpha II}$. Auch eine Anpassung der Bewegung X(Z) führt nicht zur gesuchten Lösung.

Man findet die Lösung der Aufgabe wie folgt: Es entstehen je ein Anteil Balligkeit und Schränkung aus der Bewegung X(Z) und der Bewegung Y(Z); die Anteile seien $C_{\beta x}$, $S_{\alpha x}$ und $C_{\beta y}$, $S_{\alpha y}$.

Die Schränkungsanteile sind jeweils von der zugehörigen Balligkeit abhängig. Demnach gelten die Gleichungen:

$$C_\beta = C_{\beta x} + C_{\beta y} \qquad (1)$$

$$S_\alpha = S_{\alpha x} + S_{\alpha y} \qquad (2)$$

$$S_{\alpha x} = f(C_{\beta x}) \qquad (3)$$

$$S_{\alpha y} = f(C_{\beta y}) \qquad (4)$$

Wenn es gelingt, die Zusammenhänge entsprechend den Gleichungen (3) und (4) anzugeben, läßt sich das Gleichungssystem lösen.

Es zeigt sich, daß im Falle von Breitenballigkeiten, deren Verlauf über eine quadratische Parabel beschreibbar ist, die Gleichungen (3) und (4) in folgende Form gebracht werden können:

$$S_{\alpha x} = kx * C_{\beta x} \qquad (3a)$$

$$S_{\alpha y} = ky * C_{\beta y} \qquad (4a)$$

Mit diesen Zusammenhängen findet man z.B.:

$C_{\beta y} = (S_\alpha - kx * C_\beta) / (ky - kx)$, $C_{\beta x}$ aus Gleichung (1), $S_{\alpha x}$ bzw. $S_{\alpha y}$ aus Gleichung (3a) bzw. (4a).

Es besteht nun die Aufgabe, kx und ky bzw. im allgemeinen Fall die Zusammenhänge nach den Gleichungen (3) und (4) zu bestimmen. Dazu gibt es drei Wege, nämlich die Herleitung :

1. aus Bearbeitungsbeispielen
2. über Prozeßsimulation, z.B. über Koordinatentransformation
3. über Berechnungen mit konventionellen Ansätzen.

Diesen Wegen liegt jeweils dasselbe Prinzip zugrunde, selbst wenn dies möglicherweise nicht unmittelbar erkannt wird: Man setzt ein modifiziertes Werkzeug 0 mit X (Z) und mit Y (Z) ein, überlagert beide Ergebnisse und stimmt diese dann so aufeinander ab, daß die beiden gesuchten Größen $C_\beta$ und $S_\alpha$ entstehen.

Zur richtigen Abstimmung der Werkzeuggeometrie sowie der Bahnen X (Z) und Y (Z) noch zwei Hinweise:
Anstelle von X (Z) und Y (Z) werden im Folgenden X (Z) und das Diagonalverhältnis D verwendet.

Die Zusammenhänge zwischen Schränkung und Balligkeit sind nicht ganz so einfach, wie man aufgrund der Gleichungen (3a) und (4a) für den üblichen Anwendungsfall zunächst annehmen könnte. Der Faktor ky ist nämlich, wie die Berechnungen zeigen, abhängig von D. Für eine Bestimmung der Faktoren aus experimentell ermittelten Zusammenhängen bedeutet dies:

Unter (nie vorliegenden) idealen Bedingungen würde man aus einem einzigen axial ballig bearbeiteten Werkstück kx ermitteln können. Für ky besteht aber eine Abhängigkeit von D der folgenden Art:

$$ky = C_1 + C_2/D$$

Es wäre demnach unerläßlich, eine ganze Reihe von Werkstücken im reinen Diagonalverfahren, also ohne X(Z), zu bearbeiten und die Ergebnisse über eine Regressionsrechnung auf der Basis der vorstehenden Gleichung auszuwerten.

ky läßt sich über konventionelle Ansätze z.B. wie folgt berechnen: Man stellt Betrachtungen an am Stirnschnitt des Werkstückes und an der Zahnstange (Fig. 2) und überträgt entsprechende Größen über den Normalschnittt auf die Werkzeugachse. Wie dies durchzuführen ist, zeigen u.a. die Ausführungen in "Pfauter-Wälzfräsen" Teil 1, 1976, Springer-Verlag Berlin-Heidelberg-New York, S. 175 bis 346.

Die folgenden Ausführungen gelten zunächst für die Linksflanken LF des Werkstückes 2. Man legt nun z.B. fest:

- eine Schneckenlänge $\Delta Y$, um die die Schnecke 0 später verschoben werden soll, während der Axialschlitten um $\Delta Z = b$ in Richtung Z verfährt.
- welche Schneckenseite in der Nähe der Ebene I arbeiten soll (Im Beispiel sei dies die linke Seite.). Aus beiden Angaben gemeinsam folgt das Diagonalverhältnis D einschließlich Vorzeichen.
- einen Anteil $l_1$ der Zahnstange, um den nach Umrechnung auf die Schneckenachse diese verschoben werden soll, während der Axialschlitten um SE verfährt.

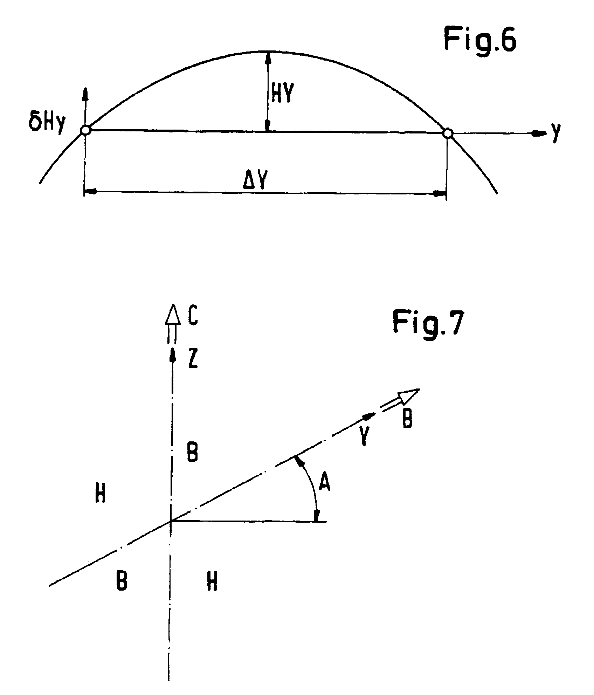

Die Zahnstange müßte auf der Strecke $l_1 + l_2$ (Figur 5) aktiv sein. Auf dieser Strecke müßte eine Eingriffswinkelabweichung $f_{H\alpha}$ erzeugt werden. Dazu ist die Strecke $l_1 + l_2$ um $f_{H\alpha}/\cos_{\alpha t}$ zu kürzen. Überträgt man diese Kürzung und die Strecke $l_1 + l_2$ auf die Werkzeugachse, so erhält man die Steigung der modifizierten Schnecke 0 in einem bestimmten Punkt. Falls die Eingriffswinkelabweichung $f_{H\alpha}$ die in der Ebene I zu erzeugende Modifikation ist, gilt die Steigung für das linke Ende von $\Delta Y$. In dieser Stellung müßte Punkt 2 der Spur 1, 2, 3 in Fig. 3 in der Ebene I liegen. Der Z-Schlitten befindet sich dann um das Maß SV unterhalb der Ebene I.

Die Modifikation der Werkzeug-Steigungshöhe möge zunächst über eine symmetrische Parabel 2. Ordnung über der Strecke ΔY und die Steigung am linken Ende von ΔY beschrieben werden.

Diese Parabel läßt sich leicht formulieren und ihre Höhe HY über ΔY (siehe Figur 6) berechnen. Aus HY erhält man $C_{\beta y}$, indem man HY über den Normalschnitt auf den Stirnschnitt des Werkstückes 2 und dort auf die Richtung tangential zum Grundkreis umrechnet. Damit kann man die Gleichung (4a) aufstellen, ky berechnen und die gesuchte Abstimmung über die Gleichungen (1) und (2) vornehmen.

Zur Topografie der Flanke, erzeugt im kontinuierlichen Diagonal-Wälzverfahren bei konstantem Achsabstand, kommt man wie folgt:

Man ersetzt in Figur 3 die Breitenballigkeit $C_\beta$ durch den Breitenballigkeitsanteil $C_{\beta y}$ und bestimmt in jeder betrachteten Z-Position einer Spur 1, 2, 3 die Punkte 1', 2', 3'. Die Höhe des $C_{\beta y}$-Verlaufes über allen Punkten der Strecke 1', 2', 3' ist die Höhe über allen Punkten der Spur 1, 2, 3.

Beschreibt man nach diesem Verfahren die Höhe aller Punkte der Flanke über oder unter der Zeichenebene, so ist die Topografie bekannt. Schneidet man die einhüllende Fläche mit Ebenen senkrecht zur Zeichenebene und senkrecht zu Z (parallel zu Z), so erhält man die Punkte eines Profil-(Flankenlinien-)Diagramms.

Überlagert man die Topografie, die aus dem Axialverfahren resultiert, mit der, die aus dem Diagonalverfahren entsteht, so hat man die endgültig zu erwartende Flankentopografie. Führt man das erläuterte Verfahren auch aus für die Rechtsflanke und betrachtet die Ergebnisse für die beiden Flanken, so erkennt man:

Breitenballigkeit und Schränkung stimmen, es sind ggf. leichte Korrekturen am Profil der Schnecke 0 (konstant über der Schneckenlänge) vorzunehmen; sie sollen eine zu erwartende positive oder negative resultierende Höhenballigkeit und eine eventuell verbliebene mittlere Profil-Winkelabweichung beseitigen. Ist der Spurversatz SV nicht richtig berücksichtigt, so muß ein geringfügig geänderter Schrägungswinkel für die Bearbeitung programmiert werden. Ist die Koppelung der Y-Achse mit der Z-Achse nicht korrekt berücksichtigt, ist eine leichte Kegeligkeit über X (Z) für die Bearbeitung zu programmieren.

Das Verfahren und das zugehörige Werkzeug 0 wurden für eine linksschräge Verzahnung für den Fall hergeleitet, daß das linke Schneckenende in der Nähe der Ebene I arbeitet. Würde das rechte Schneckenende in der Nähe der Ebene I arbeiten, so erhielte man nach dem vorstehend beschriebenen Verfahren ein wesentlich anders zu modifizierendes Werkzeug. Das Werkzeug würde breitenhohl, und man erhielte andere Werte für die Konstanten kx und ky. Ob ein Werkzeug breitenhohl oder breitenballig auszuführen ist, hängt ab von der Richtung der resultierenden Vorschubbewegung in den Richtungen Y und Z (Fig7). Fällt diese Richtung in den Bereich des Kreuzungswinkels der Drehachsen von Werkzeug und Werkstück, so sind breitenballige Werkzeuge B, anderenfalls sind breitenhohle Werkzeuge H erforderlich.

Das vorgeschlagene Verfahren erlaubt es zu shiften. Das Shiften kann nach der Bearbeitung eines oder mehrerer Werkstücke 2 erfolgen; es ist auch möglich, in einem Bereich des Werkzeuges 0 zu schruppen, in einem anderen zu schlichten. Man muß dazu den Achsabstand über zwei Anteile korrigieren. Beide Anteile lassen sich aus dem Verlauf von $C_{\beta y}$, herleiten, wenn man die Kurve entsprechend verlängert. Diese Kurve läßt sich nämlich auch als Verlauf des Aufmaßes je Flanke im Stirnschnitt, abhängig von der jeweiligen Z-Position auf dem Meßzylinder, deuten. Man rechnet nun den Shiftbetrag über das Diagonalverhältnis D auf die Werkstück-Achsrichtung um und trägt diesen Betrag von der mittleren Z-Position in der richtigen Richtung ab, bestimmt in diesem Stirnschnitt a) das Flankenaufmaß und b) die Tangente an die "Aufmaß" - Kurve. Aus a) erhält man einen konstanten, aus b einen proportional mit Verfahrweg veränderlichen Korrekturbetrag für den Achsabstand.

Es ist mit dem vorgeschlagenen Verfahren und Werkzeug in gewissen Grenzen möglich, eine andere Balligkeit und/oder Schränkung zu erzeugen, als sie der Auslegung zugrunde gelegen haben. Man muß dazu über die Gleichungen (1) und (2) die Konstanten kx und ky berechnen, kx über die Bahn X(Z) und ky über das Diagonalverhältnis auf den gewünschten Wert bringen.

Das Verfahren ermöglicht es natürlich auch, beide Werkstückflanken in separaten Operationen mit unterschiedlichen Breitenballigkeiten und Schränkungen auszubilden. Dazu sind die Werkzeuggeometrie und Kinematik für beide Flanken separat festzulegen.

**Patentansprüche**

1. Verfahren zur Bearbeitung der Flanken im wesentlichen zylindrischer, aber breitenballig modifizierter Verzahnungen im kontinuierlichen Diagonal-Wälzverfahren unter Verwendung eines schneckenförmigen Werkzeuges, dessen Steigungshöhe über der Schneckenlänge nicht konstant ist,
dadurch gekennzeichnet, daß

  * die Steigungshöhenmodifikation (MH0) des Werkzeuges
  * das Diagonalverhältnis (D) und
  * der Abstand (X) der Achsen von Werkzeug (0) und Werkstück (2), abhängig von der momentan wirksamen werkstückaxialen Arbeitsposition (Z), also X(Z), sowie
  * der Drehanteil (ΔC) der Schraubbewegung des Werkzeuges (0) relativ zum Werkstück (2) abhängig von der momentan wirksamen werkstückaxialen Arbeitsposition, also ΔC(Z), so aufeinander abgestimmt sind, daß
  * der aus dem werkstückaxialen Versatz der Erzeugungsberührspuren auf beiden Flanken resultierende Einfluß auf den erzeugten Schrägungswinkel über eine Anpassung des Drehanteils der Schraubbewegung ($\Delta$C) des Werkzeuges (0), abhängig von der werkstückaxialen Arbeitsposition (Z), also $\Delta$C(Z), ausgeglichen wird, und

- die aus der Änderung des Achsabstandes bzw. aus der Änderung des Drehanteils der Schraubbewegung entstehenden Anteile von Breitenballigkeit und Schränkung und
- die aus der Diagonalbewegung des steigungshöhenmodifizierten Werkzeuges (0) entstehenden Anteile von Breitenballigkeit und Schränkung

resultierend die gewünschten Werte für Breitenballigkeit und Schränkung ergeben.

2. Verfahren nach Anspruch 1,
dadurch gekennzeichnet, daß die Steigungshöhe (H) des Werkzeuges (0) von einem Ende des aktiven Bereiches zum anderen hin auf einer Flanke linear mit dem Abstand vom aktiven Werkzeugende hin zunehmend, auf der zweiten linear abnehmend ausgeführt ist.

3. Verfahren nach Anspruch 1 oder 2,
dadurch gekennzeichnet, daß ein breitenballiges Werkzeug (0) eingesetzt wird, wenn die Richtung der resultierenden Vorschubbewegung in Richtung der Drehachsen von Werkzeug (0) und Werkstück (2) innerhalb des Kreuzungswinkels der Achsen liegt, und ein hohlballiges, wenn die Richtung innerhalb des Bereiches 180° minus Kreuzungswinkel liegt.

4. Verfahren nach einem der Ansprüche 1 bis 3,
dadurch gekennzeichnet, daß mit einem Werkzeug (0) gearbeitet wird, das über einen größeren Breitenbereich als zur Bearbeitung eines Werkstückes (2) nötig, profiliert ist, dessen Arbeitsbereich geshiftet wird, wobei den Bewegungen, die ohne Shiften ausgeführt werden, eine zusätzliche Änderung des Achsabstandes, die aus einem konstanten Anteil und einem Anteil proportional zum axialen Verfahrweg besteht, überlagert wird.

5. Verfahren nach einem der Ansprüche 1 bis 4,
dadurch gekennzeichnet, daß Modifikationsbetrag und aktive Werkzeuglänge so aufeinander abgestimmt sind, daß die gewünschte Breitenballigkeit und Schränkung des Werkzeuges ohne Änderung des Achsabstandes erzeugt werden und lediglich im Falles des Shiftens die Änderung des Abstandes, die in diesem Falle ohne Umkehr der Bewegungsrichtung erfolgt, erforderlich ist.

6. Verfahren nach einem der Ansprüche 1 bis 4, bei dem mit einem vorhandenen Werkzeug, das über eine ausreichend große Breite profiliert ist, mit dem eine andere Breitenballigkeit und/oder eine andere Schränkung erzeugt werden soll, als bei der Auslegung von Werkzeug und Prozeß berücksichtigt, dadurch gekennzeichnet, daß der erforderliche Zusammenhang zwischen den Anteilen von Breitenballigkeit und Schränkung, die aus der Werkzeug- Modifikation und dem Diagonalverhältnis (D) resultieren, über eine Anpassung des Diagonalverhältnisses (D) auf den gewünschten Wert gebracht werden.

7. Verfahren nach einem der Ansprüche 1 bis 6,
dadurch gekennzeichnet, daß beide Flanken (RF, LF) separat bearbeitet werden und dabei unterschiedliche Breitenbandballigkeit und/oder Schränkung erhalten.

# Fig.1

# Fig.3

# Fig.5

Fig.2

Normalschnittebene

I

5
6
1
2
7
4
3  LF  RF
II
β

$r_a$
$r_M$  $r$
$r_b$
$\alpha_t$  $\alpha_t$
$r_M$
$P_{etL}$
ER
AL
AR  EL
$P_{etR}$
0

Fig.4 A

HLnenn | HLnenn
HList1 | HList2
HRist1 | HRist2
HRnenn | HRnenn

Fig.4 B

HLnenn | HLnenn
HList1 | HList2
HRnenn | HRnenn
HRist1 | HRist2

Fig.6

HY

δHy

ΔY

y

Fig.7

C

Z

B

B

A

γ

H

B

H